# EUROPÄISCHE PATENTANMELDUNG

(11) **EP 1 393 614 A2**
(43) Veröffentlichungstag der Anmeldung: **03.03.2004**
(21) Anmeldenummer: 03017904.8
(22) Anmeldetag: 06.08.2003
(51) Int. Cl.: A01F 15/07

(54) **Wickelgerät**

(30) Priorität: 28.08.2002 DE 10239454; 30.08.2002 DE 10240091
(71) Anmelder: DEERE & COMPANY, Moline, Illinois 61265-8098 (US)
(72) Erfinder: Viaud, Jean, 70100 Gray (FR)
(74) Vertreter: Magin, Ludwig Bernhard

(57) **Zusammenfassung**

Bekannte Wickelgeräte für Rundballen weisen einen Wickeltisch oder Wickelarme auf, die sich um eine vertikale Achse drehen und einen sich um seine Längsmittenachse drehenden Rundballen mit Stretchfolie umwickeln. Ein Nachteil dieser Bauweise ist ihre räumliche Ausdehnung.
Es wird ein Wickelgerät (14) mit einer im Wesentlichen vertikal ausgerichteten Ringführung (80) für wenigstens einen Wickelmaterialträger (84) vorgeschlagen, in deren Innenraum sich ein Träger (82) zur drehbaren Abstützung eines Rundballens befindet, wobei während des Wickelvorgangs die Drehachse des Rundballens (44) senkrecht zu der Mittenachse des Bewegungskreises des Wickelmaterialträgers (84) verläuft.
Derartige Wickelgeräte werden in der Landwirtschaft eingesetzt.

## Beschreibung

Die Erfindung betrifft ein Wickelgerät zur Umhüllung eines Rundballens mit einer Hüllbahn.

Die DE 196 54 982 A1 offenbart eine Wickelvorrichtung für einen Gras- oder Stroh-Pressling, die an ein Fahrzeug anschließbar ist und Presslinge mit rundem oder rechteckigem Querschnitt mit Folie umwickelt. Die Presslinge sind hierzu in der Art einer Schlange mit ihren Stirnseiten aneinander gereiht, können aber auch einzeln umwickelt werden. Es ist offen, wie die Presslinge in diese Lage gebracht werden und es scheint, dass es sich bei diesen Presslingen um solche mit einem kleinen Durchmesser handelt.

Aus der DE 40 21 307 A1 geht eine Großballenpresse mit einer vergleichbaren Wickelvorrichtung für quaderförmige Ballen hervor, die in gleicher Weise der Wickelvorrichtung zugeführt und von dieser umwickelt werden.

Eine andere Ausführungsform einer mit einer Wickelvorrichtung kombinierten Rundballenpresse geht aus der US 5822967 A1 hervor, bei der allerdings zwei Rollen mit Wickelmaterial um eine vertikale Achse drehen und der Rundballen während des Wickelvorgangs um eine horizontale Achse drehbar ist. Ein Arm zum Aufnehmen der Wickelvorrichtung erstreckt sich auch in einer Außerbetriebsstellung beträchtlich über die Rundballenpresse hinaus, was beim Manövrieren ungünstig ist. Des weiteren müssen die Dreharme mit den Rollen bei jedem Beund Entladevorgang des Rundballens in eine seitliche Außerbetriebsstellung gebracht werden.

Die EP 1 210 861 A2 zeigt eine Rundballenpresse mit einer rückwärtig angebrachten Wickelvorrichtung, die im Außerbetriebszustand demontierbar ist. Während des Betriebs ergibt die Kombination jedoch eine große Baulänge des gesamten Gefährts.

In der EP 1 050 207 A2 ist ein Ballenwickler offenbart, der in der Art eines Anhängers hinter einen Ackerschlepper gehängt werden kann und mittels einer Gabel auf dem Boden ruhende Rundballen auf einen Wickeltisch anhebt.

Das der Erfindung zugrunde liegende Problem wird darin gesehen, dass die Zusammenfassung einer bekannte Rundballenpresse mit einer ebenfalls bekannten Wickelvorrichtung stets zu einem ausladenden Gefährt führt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Wickelgerät in seiner Längenausdehnung relativ gering gehalten werden und ist dazu geeignet, sowohl im Anbau an eine Rundballenpresse, als auch als ein freistehendes Gerät betrieben zu werden, das entweder mit einer Ladevorrichtung versehen wird oder mittels eines Frontladers oder dergleichen beladen wird. Die Rolle bzw. die Walze kann glatt, mit Förderstegen versehen oder sonstwie ausgebildet werden, um die Drehbewegung des Rundballens zu erreichen bzw. zu fördern. Bei der Hüllbahn handelt es sich vorwiegend um eine Stretchfolie, die geeignet ist, den Silageprozess zu fördern. Es reicht, wenn entweder die Rolle oder die Walze angetrieben wird, um den Rundballen in eine Drehbewegung zu versetzen, wobei die Drehzahl vorzugsweise veränderbar ist. Die Rolle und die Walze können gemeinsam auf dem Träger angeordnet sein; die Walze kann aber auch unabhängig von dem Träger z. B. an der Ringführung angebracht oder an einem dem Wickelgerät zugeordneten Förderer vorgesehen werden.

Eine Verstellbarkeit des Trägers gegenüber der Ringführung macht es möglich, den Rundballen in verschiedene Stellungen dieser gegenüber zu bringen. Es wird dadurch auch ermöglicht, den Rundballen auf den Boden abzulegen oder gar aufzunehmen.

Das Wickelgerät kann in einer aufrechten Stellung auf dem Boden abgestellt werden, um entweder in einem Außerbetriebszustand zu verharren oder auch betrieben zu werden. Im Außerbetriebszustand kann auch der Träger zum Halten benutzt werden. Soll ein Betrieb bei abgesetzter Ringführung erfolgen oder die abgesetzte Ringführung stabilisiert werden, ist es sinnvoll, eine weitere Stütze vorzusehen. Die Stütze kann wahlweise und in bekannter Weise längenveränderlich und/oder mit Fremdkraft verstellbar ausgeführt werden.

Ein Gegenlager an dem Träger hat den Vorteil, dass der Rundballen bei einer Verstellung des Trägers, z. B. zum Entladen des Rundballens, nicht von dem Träger fällt, was ansonsten eventuell passieren könnte, wenn sich der Abstand zwischen der Rolle und der Walze verändern sollte.

Eine Umlaufbewegung des Wickelmaterialträgers auf einer Kreisbahn wird dadurch erzeugt, dass die Ringführung einen drehbaren Ring aufweist, der in einem geschlitzten Führungsgehäuse motorisch drehbar ist. Bei dem Wickelmaterialträger handelt es sich herkömmlich um eine drehbar gelagerte Spule, auf der hunderte oder tausende Meter an Stretchfolie oder dergleichen aufgewickelt sind. Für die Ringführung kann ein oder mehrere Wickelmaterialträger vorgesehen werden. Der Schlitz in dem Führungsgehäuse kann sowohl an einer radial innen- oder außenliegenden Seite des Führungsgehäuses, als auch an einer vorderen oder rückwärtigen Stirnseite vorgesehen werden. Desgleichen kann auch ein Omegaoder Hutprofil verwendet werden, wesentlich ist lediglich, dass der Ring geführt ist und wenigstens einen Wickelmaterialträger aufnehmen kann. Andererseits kann das Führungsgehäuse auch von einem Wickelmaterialträger umfasst werden, der sich dann wie auf einer Schiene oder entlang eines Rohrs, Stabs oder dergleichen bewegt. Die Fortbewegung kann mittels eines Seilzugs, einer Kette oder auch mittels eines Reib- oder Zahnradmotors erfolgen. Die Geschwindigkeit des Wickelmaterialträgers kann sowohl konstant als auch variabel gehalten werden und sich so z. B. an die Anzahl' benutzter Wickelmaterialträger anpassen.

Damit der Rundballen einerseits von dem Träger gehalten und andererseits störungsfrei von Hüllmaterial umgeben werden kann, ist der Träger mit einem Rahmen versehen oder als ein solcher ausgebildet, der einen Innenraum belässt, durch den der Wickelmaterialträger während des Wickelbetriebs bewegbar ist. Demnach befinden sich die Teile des Rahmen, z. B. Quer- und Längsstreben, außerhalb der Bewegungsbahn der Wickelmaterialträger. Der Rahmen kann immer so ausgebildet sein oder nur für den Wickelbetrieb so angeordnet werden. Bei dem Rahmen muss es sich auch nicht zwangsläufig um ein geschlossenes Gebilde handeln; auch eine gabelförmige oder sonstige Ausbildung, die gewährleistet, dass der Rundballen sicher getragen wird, kommen infrage.

Wenn die Ringführung transportabel und eventuell an ein anderes Gerät anbaubar sein soll, kann dies grundsätzlich in dauerhafter oder nur schwer lösbarer Weise geschehen. Es kann jedoch Montagezeit gespart und die Flexibilität erhöht werden, wenn an der Ringführung oder mit ihr verbunden Form- bzw. Schnellschlusselemente wie Haken, Kupplungen, Bolzenverbindungen usw. vorgesehen sind. Vorteilhaft und bewährt sind z. B. Elemente, wie sie zum Anschluss von Werkzeugen an Frontladern oder Dreipunktgerätekupplungen verwendet werden. Analog könnte das Wickelgerät auch an einen Frontlader angebaut und leicht transportiert werden. Desgleichen ist ein Anschluss an den Auslass einer Rundballenpresse oder auch einer anderen Presse möglich, die z. B. quaderförmige Ballen erzeugt.

Der Rundballen oder grundsätzlich jeder Ballen, kann auf verschiedenen Flächen abgelegt werden, z. B. seiner Umfangsfläche oder einer seiner Stirnflächen. Die Ablage auf einer Stirnfläche hat den Vorteil, dass der Rundballen bei der Ablage am Hang nicht wegrollt. Eine solche Ablage kann dadurch erreicht werden, dass der Träger an der Ringführung in deren Umfangsrichtung verstellbar anbringbar ist und somit die Neigung der Längsmittenachse des Rundballens während des Ablegevorgangs verändert, bis er auf seine Stirnfläche kippt.

In einer alternativen Weise kann der Ballen auf seine Stirnfläche abgelegt werden, wenn der Träger gegenüber der Ringführung vertikal verstellbar, insbesondere verschwenkbar ist.

Insbesondere bei Rundballen mit einem kleinen Durchmesser wird mittels einer Abwurfhilfe sichergestellt, dass der Rundballen nicht in dem Zwischenraum zwischen der Rolle und der Walze verharrt, wenn der Träger zum Ablegen des Rundballens bewegt wird. Diese Abwurfhilfe kommt an dem Rundballen zur Anlage, sobald der Rundballen seine Wickelstellung verlassen soll. Dies kann dann und in dem Maß erfolgen, wie sich der Träger verstellt, also von diesem abhängig. Es kann aber auch mittels eines Drückers oder dergleichen erfolgen, der auf den Rundballen fremdkraftgesteuert einwirken kann.

Eine Betätigungsvorrichtung kann dadurch nachgiebig sein, dass sie z. B. federnd abgestützt wird, dass sie eine als Gasspeicher oder mechanisch ausgebildete Feder enthält, dass ein Druckmedium wie Öl oder Luft durch Ventile gedrosselt entweicht usw. Diese Nachgiebigkeit hat den Vorteil, dass die Wucht eines ankommenden Rundballens gedämpft wird und entweder ein freistehendes Wickelgerät sicher stehen bleibt oder ein angebautes Wickelgerät nicht zu große Belastungen auf den Anschluss überträgt.

Wenn die Drehzahl der Rolle oder Walze veränderbar ist, manuell oder automatisch, kann damit die Anzahl und Überlappungen der Lagen auf dem Rundballen verändert bzw. bei Ausfall eines Wickelmaterialträgers konstant gehalten werden. Es kann auch auf schwierige Bedingungen am Anfang und Schluss des Wickelvorgangs eingegangen werden.

Die Verstellung der Lage der Rolle macht es möglich, den zu bewickelnden Ballen sowohl richtig auf dem Träger zu positionieren, als auch zu erreichen, dass er im richtigen Winkel und damit sicher auf diesen aufliegt. Die Verstellung erfolgt vorzugsweise mittels Stellmotoren und automatisch, kann in einer einfachen Version aber auch mittels einer Lochschiene oder -platte oder mittels einer Klemmvorrichtung erreicht werden.

In der Zeichnung ist sind mehrere nachfolgend näher beschriebene Ausführungsbeispiele der Erfindung dargestellt. Es zeigt:
- Fig. 1: eine Kombination einer Rundballenpresse mit einem Wickelgerät nach einer ersten Ausführungsform mit einem Förderer in schematischer Darstellung und in Seitenansicht,
- Fig. 2: das Wickelgerät aus der Kombination nach Figur 1 in einer rückwärtigen Ansicht,
- Fig. 3: die Rundballenpresse ohne Wickelgerät in Seitenansicht und schematischer Darstellung,
- Fig. 4: das Wickelgerät ohne Rundballenpresse in Seitenansicht und schematischer Darstellung,
- Fig. 5: die Kombination nach Figur 1 während der Übergabe eines Rundballens von der Rundballenpresse in das Wickelgerät,
- Fig. 6: die Kombination nach Figur 1 während des Umwickelns eines Rundballens in dem Wickelgerät,
- Fig. 7: die Kombination nach Figur 1 während des Auswurfs eines Rundballens aus dem Wickelgerät,
- Fig. 8: die Rundballenpresse aus der Kombination nach Figur 1 mit dem Förderer und ohne Wickelgerät während des Auswurfs eines Rundballens,

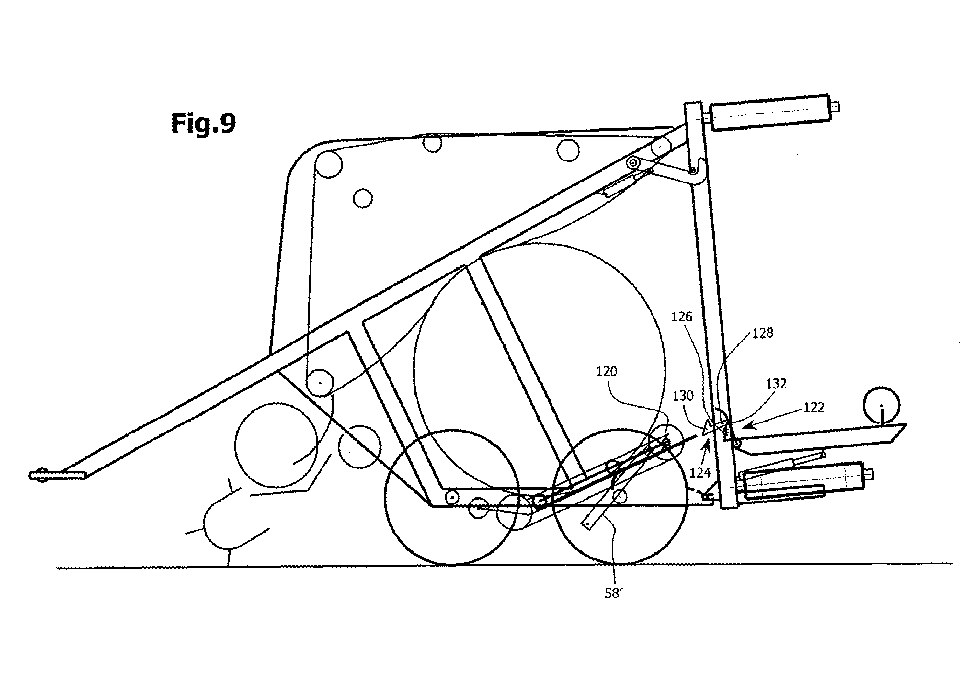

- Fig. 9: eine Kombination einer Rundballenpresse mit einem Wickelgerät nach einer zweiten Ausführungsform mit einem Förderer in schematischer Darstellung und in Seitenansicht,
- Fig. 10: die Kombination nach Figur 9 in einem Übergabezustand des Förderers,
- Fig. 11: die Kombination nach Figur 9 in einem Wickelbetrieb,
- Fig. 12: die Kombination nach Figur 9 während des Entladens des Rundballens,
- Fig. 13: eine Kombination einer Rundballenpresse mit einem Wickelgerät nach einer dritten Ausführungsform mit einem Förderer und einem schwenkbaren Träger in schematischer Darstellung und in Seitenansicht,
- Fig. 14: das Wickelgerät aus der Kombination nach Figur 13 in einer rückwärtigen Ansicht,
- Fig. 15: das Wickelgerät aus der Kombination nach Figur 13 in einer Draufsicht,
- Fig. 16: die Kombination nach Figur 13 während der Abgabe eines Rundballens in Seitenansicht,
- Fig. 17: das Wickelgerät aus der Kombination nach Figur 13 während der Abgabe des Rundballens in einer rückwärtigen Ansicht,
- Fig. 18: eine Kombination einer Rundballenpresse mit einem Wickelgerät nach einer vierten Ausführungsform mit einem Förderer und einem schwenkbaren Träger in schematischer Darstellung und in Seitenansicht, und
- Fig. 19: das Wickelgerät aus der Kombination nach Figur 18 während der Abgabe des Rundballens in einer rückwärtigen Ansicht.

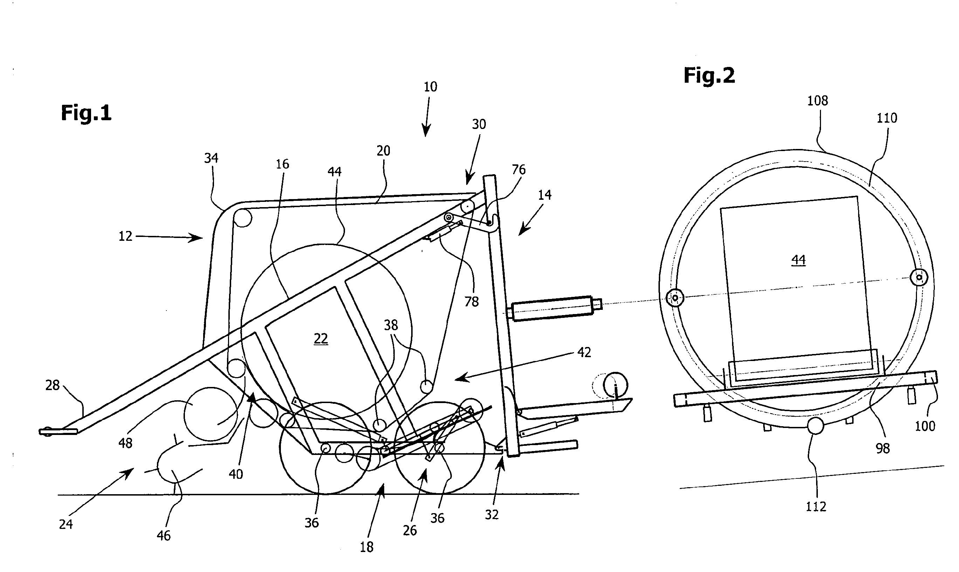

Figur 1 zeigt eine Kombination 10 aus einer Rundballenpresse 12 und einem Wickelgerät 14.

Die Rundballenpresse 10 ist vorzugsweise von der Bauart gemäß der deutschen Patentanmeldung 10153540.6, deren Offenbarung hiermit einbezogen wird. Grundsätzlich kann die Rundballenpresse 10 aber von jeder herkömmlichen Bauart mit einer festen oder variablen Presskammer sein und sowohl in der Landwirtschaft als auch im industriellen Betrieb eingesetzt werden. Hierzu weist die Rundballenpresse 10 einen Rahmen 16, ein Fahrgestell 18, Presselemente 20, einen Pressraum 22, eine Zuführvorrichtung 24 und einen Förderer 26 auf.

Der Rahmen 16 wird von einem Schweiß- und/oder Schraubzusammenbau gebildet, der nach vorne in einer Deichsel 28 ausläuft, unten mit dem Fahrgestell 18 verbunden ist und rückwärtig obere und untere Anschlusspunkte 30, 32 aufweist. Zwischen jeweils nicht näher bezeichneten seitlichen Wangen des Rahmens 16 sind Seitenwände 34 vorgesehen, die zwischen sich den Pressraum 22 aufnehmen. Im Bereich des oberen Anschlusspunktes 30 befindet sich auf jeder Seite des Rahmens 16 ein Hakenelement 76, das einen nach oben offenen Haken enthält und von einer Betätigungsvorrichtung 78 verstellt werden kann.

Das Fahrgestell 18 kann in Tandemachsbauweise mit zwei Achsen 36 ausgebildet sein, wie dies dargestellt ist, oder auch nur eine einzige gefederte oder ungefederte Achse 36 aufweisen, die an jeder Seite ein Rad trägt. Das Fahrgestell 18 befindet sich unterhalb des Pressraums 20 und etwas hinter ihm.

Die Presselemente 20 sind in dem dargestellten Ausführungsbeispiel als endlose flexible Zugmittel z.B. als Riemen, Bänder, Stabketten etc. ausgebildet und umgeben umfangsseitig im Wesentlichen den Pressraum 22. Die Presselemente 20 werden über Rollen 38 geführt, deren Stellung z. T. starr und z. T. beweglich ist. Die Verwendung beweglich angebrachter Rollen 38 führt zu einem Pressraum 22 variabler Größe. Die beweglichen Rollen 38 werden auf nicht dargestellte Weise von schwenkbaren Armen aufgenommen und je nach Betriebszustand verstellt. Im vorderen und der Zuführvorrichtung 24 zugelegenen Bereich des Pressraums 22 lassen die Presselemente 20 einen Einlass 40, durch den Pressgut in den Pressraum 20 gefördert werden kann. Im rückwärtigen unteren Bereich des Pressraums 20 wird ein Auslass 42 gebildet, wenn die entsprechenden Rollen 38 mit den Presselementen 20 angehoben werden und dabei den Pressraum 22 öffnen.

Der Pressraum 22 ist in seiner Größe veränderbar ausgebildet, weil die Presselemente 20 nachgiebig sind. Stattdessen könnte auch ein Pressraum 22 gebildet werden, dessen Größe unveränderlich ist und der z. B. von ortsundveränderlichen Rollen oder Bändern umgeben ist. Der Pressraum 22 ist so ausgerichtet, dass ein sich in ihm befindlicher Rundballen 44 um eine horizontal und quer zur Fahrtrichtung verlaufende mittige Zylinderachse dreht.

Die Zuführvorrichtung 24 enthält in diesem Ausführungsbeispiel einen Aufnehmer 46 in der Form einer sogenannten Pick-Up und eine daran anschließende gegebenenfalls als Schneidvorrichtung ausgebildete Fördervorrichtung 48, die aufeinanderfolgend auf dem Boden liegendes Pressgut erfassen und durch den Einlass 40 in den Pressraum 22 fördern, wo es zu einem Rundballen 44 geformt wird.

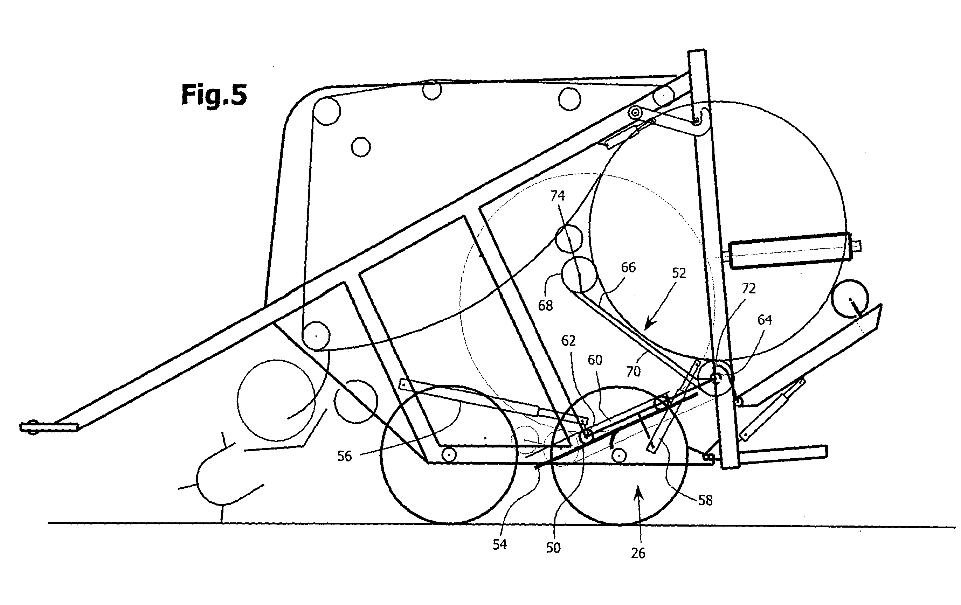

Der Förderer 26 weist, wie in Figur 5 veranschaulicht, einen Rahmen 50, einen Fördertisch 52, eine Führung 54, eine erste Betätigungsvorrichtung 56 und eine zweite Betätigungsvorrichtung 58 auf. Die Aufgabe des Förderers 26 besteht darin, einen aus dem Pressraum 22 abgegebenen Rundballen 44 aufzunehmen und entweder zu dem Wickelgerät 14 zu fördern oder auf dem Boden abzulegen.

Der Rahmen 50 ist zweiteilig ausgebildet und enthält einen Schlitten 60 mit Rollen 62, der in einem. Lager 64 vertikal schwenkbar mit einem Schwenkrahmen 66 verbunden ist. Der Schlitten 60 wird mit seinen Rollen 62 in der Führung 54 aufgenommen und kann in der Fahrtrichtung geneigt zu dem Boden bewegt werden. Die Rollen 62 sind derart an dem Schlitten 60 angebracht, dass sie in jeder Endstellung des Schlittens 60 noch in der Führung 54 gehalten werden. In einer vereinfachten Bauweise können anstelle der Rollen 62 auch Gleitbacken oder dergleichen vorgesehen werden.

Der Fördertisch 52 enthält wenigstens zwei Walzen 68, die weniger als den Durchmesser eines Rundballens 44 voneinander beabstandet drehbar auf dem Schwenkrahmen 66 aufgenommen sind. In dem bevorzugten Ausführungsbeispiel ist über die Walzen 68 ein endloses Band 70 geschlungen, das den Abstand zwischen den Walzen 68 überbrückt und zu einem geringem Maß durchhängt. Grundsätzlich ist ein solches Band 70 nicht erforderlich, und an seiner Stelle könnten auch weitere Walzen vorgesehen werden, wenn der Abstand denn überbrückt werden soll. Eine Drehachse 72 der dem Wickelgerät 14 zugelegenen Walze 68 dient zugleich als Lager 64. Auf der dem Wickelgerät 14 abgelegenen Seite des Schwenkrahmens 66 ist neben der Walze 68 eine weitere Walze 74 vorgesehen, die einen kleineren Durchmesser aufweisen kann als die übrigen Walzen 68 und so gegenüber einer Ebene durch die Drehachsen der Walzen 68 versetzt ist, dass sie zu einer Muldenform des Fördertischs 52 führt. Der Fördertisch 52 kann eine untere nach unten vorne geneigte Endstellung (Figur 5, gestrichelte Linien), in der der Rundballen 44 von dem Pressraum 22 angenommen wird, und eine obere nach oben hinten geneigte Endstellung (Figur 5, durchgezogenen Linien) einnehmen, in der er den Rundballen 44 in das Wickelgerät 14 abgeben kann. Die Walzen 68 können frei drehbar oder angetrieben ausgebildet sein. In dem bevorzugten Ausführungsbeispiel ist die rückwärtige Walze 38 angetrieben, z. B. mittels eines Hydraulikmotors.

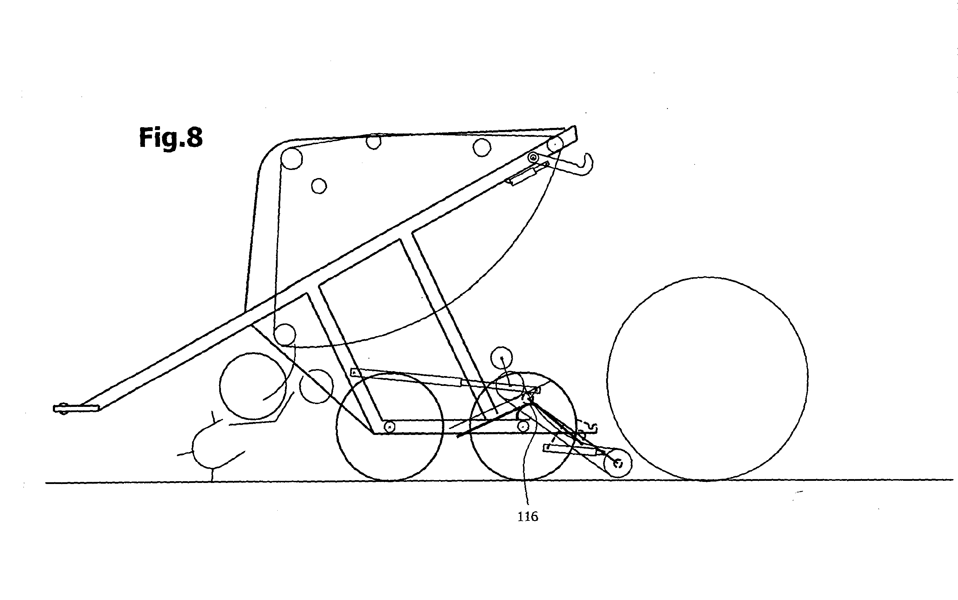

Die Führung 54 besteht im einfachsten Fall aus zwei zu der Längsmittenebene der Rundballenpresse 12 parallelen U-Schienen, die an den Rahmen 16 der Rundballenpresse 12 angeschraubt werden können und sich zu deren Längemittenebene hin öffnen. Die Führung 54 verläuft mit einer geringen Neigung von z. B. 30 Grad zu dem Boden nach hinten ansteigend und erstreckt sich oberhalb der Achse 36. Der Innenraum der Führung ist geeignet, die Rollen 38 drehbar aufzunehmen. Die Führung 54 ist so ausgebildet, dass sie auch in dem Betriebszustand nach Figur 8 den Schlitten 60 noch sicher führt. Hierzu könnten einteilige Schienen verwendet werden, die z. B. mittels einer nicht gezeigten weiteren Betätigungsvorrichtung um ein horizontales Lager gekippt werden, wenn dies erforderlich sein sollte. In dem bevorzugten Ausführungsbeispiel sind die Schienen wie insbesondere in Figur 8 zu sehen ausgebildet. Danach sind die Schienen zweiteilig und enthalten oberhalb der rückwärtigen Achse 36 ein Gelenk 116, das beide Abschnitte vertikal schwenkbar miteinander verbindet. Erforderlichenfalls kann ein beim Schwenken entstehender Abschnitt mittels eines Kurvenstücks überbrückt werden. Auf diese Weise ist es möglich, dass der Schlitten 60 nach dem Anheben des Rundballens 44 über die rückwärtige Achse 36 wieder nach unten gleitet und den Rundballen 44 schonend auf den Boden ablegt.

Die erste Betätigungsvorrichtung 56 ist als ein doppeltwirkender Hydraulikmotor ausgebildet, der einenends an dem Rahmen 16 der Rundballenpresse 12 und anderenends an dem Schlitten 60 schwenkbar angelenkt ist. Die Ausrichtung der ersten Betätigungsvorrichtung 56 ist so gewählt, dass dessen Längenveränderung eine Verstellung des Schlittens 60 in der Führung 54 bewirkt. Die erste Betätigungsvorrichtung 56 wird mittels nicht gezeigter elektromagnetisch gesteuerter Ventile vorzugsweise von einem Bordrechner oder manuell gesteuert. Der Hub der ersten Betätigungsvorrichtung 56 reicht aus, den Schlitten 60 in beiden Richtungen über die gesamte Länge der Führung 54 zu bewegen.

Die zweite Betätigungsvorrichtung 58 ist ebenfalls als Hydraulikmotor ausgebildet, allerdings einfachwirkend. Die zweite Betätigungsvorrichtung 58 ist einenends an dem Schlitten 60 und anderenends an dem Schwenkrahmen 66 jeweils des Fördertisches 52 gelenkig angebracht und dient dazu, den Schwenkrahmen 66 aus seiner unteren Endstellung gegebenenfalls mit dem darauf befindlichen Rundballen 44 in seine obere zu schwenken und aus seiner oberen Endstellung kontrolliert aufgrund der Schwerkraft abzusenken. Die Steuerung der zweitenBetätigungsvorrichtung 58 erfolgt ebenfalls elektrisch und vorzugsweise mittels eines Bordrechners.

Grundsätzlich können die beiden Betätigungsvorrichtungen 56, 58 auch mechanisch, elektrisch oder pneumatisch betrieben ausgebildet werden.

Bei diesem Stand der Beschreibung kann bereits eine Funktion des Fördertischs 52 beschrieben werden, die dieser auch ohne angebautes Wickelgerät 14 besitzt. Gemäß Figur 8 ist nur die Rundballenpresse 12 vorgesehen, die den Fördertisch 52 ausgangsseitig des Pressraums 22 besitzt. Sobald die Presselemente 20 und die sie tragenden Rollen 38 zum Öffnen des Pressraums 22 angehoben werden und der Rundballen 44 aus diesem austreten und auf den Fördertisch 52 fallen kann, was auch aus Figur 5 entnommen werden kann, bewegt der Fördertisch 52 diesen nach hinten über die Achse 36 und gleitet nach Überschreiten der Hälfte des Weges auf dem nach unten gekippten Abschnitt der Führung 54 nach unten, um den Rundballen 44 abzulegen.

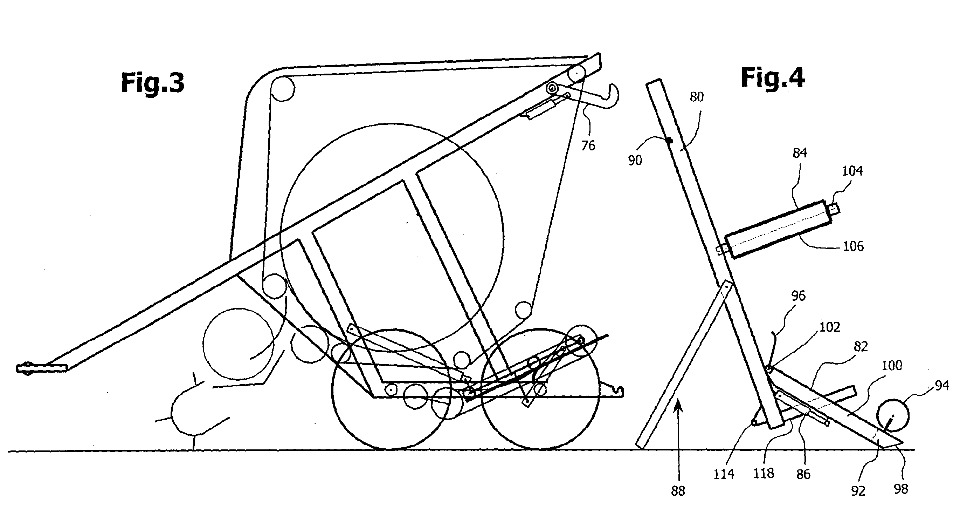

Das Wickelgerät 14 ist in den bevorzugten Ausführungsbeispielen als eine selbständige Einheit ausgebildet, die in Schnell-Montage-Weise ohne Werkzeuge an die Rundballenpresse 12 angeschlossen werden kann. Das Wickelgerät 14 kann auch so ausgebildet werden, was nicht dargestellt ist, dass es an einen Front- oder Hecklader, einen Telehandler, einer Drei-Punkt-Gerätekupplung oder dergleichen leicht lösbar angebaut werden kann. Das Wickelgerät 14 enthält - siehe Figur 4 - eine Ringführung 80, einen Träger 82, wenigstens einen Wickelmaterialträger 84, eine dritte Betätigungsvorrichtung 86 und eine Stütze 88.

Die Ringführung 80 enthält einen vorzugsweise kreisrunden Ring mit einem nahezu vollkommen geschlossenen Querschnitt, der lediglich durch einen nicht näher dargestellten oder bezeichneten Schlitz in einem Führungsgehäuse 108 offen bleibt. Die Ringführung 80 nimmt in dem angebauten Zustand des Wickelgeräte 14 eine aufrechte Stellung unter nahezu neunzig Grad zum Boden ein und wird von dem Rahmen 16 der Rundballenpresse 12 getragen. Anstelle eines fast geschlossenen Querschnitts könnte auch ein Omega-Profil oder dergleichen verwendet werden. Im oberen Viertel der Ringführung 80 ist an dem Führungsgehäuse 108 ein Halter 90 vorgesehen, der von dem Hakenelement 76 an dem Rahmen 16 ergriffen werden kann und z.B. als Zapfen, Bolzen oder dergleichen ausgebildet ist. Die Ringführung 80 bzw. das Führungsgehäuse 108 weist einen Durchmesser auf, der geeignet ist, den Rundballen 44 ohne Änderung seiner Ausrichtung passieren zu lassen, so dass er auf den Träger 82 abgesetzt werden kann. In dem Führungsgehäuse 108 befindet sich ein vorzugsweise geschlossener Ring 110, der in dem Führungsgehäuse 108 drehbar ist. Die Bewegung des Rings 110 erfolgt mittels eines insbesondere hydraulisch angetriebenen Motors 112, der durch eine Öffnung in dem Führungsgehäuse 108 in Kontakt mit dem Ring 110 gerät. Der Antrieb des Motors 112 kann entweder über eine formschlüssige Verbindung, z. B. Zahnstange-Zahnritzel oder durch eine kraftschlüssige Verbindung, z. B. Reibrad auf den Ring 110 übertragen werden. Der Motor 112 ist in diesem Ausführungsbeispiel geschützt im unteren Bereich des Führungsgehäuses 108 vorgesehen und wird mittels elektromagnetisch gesteuerte Ventile in Bewegung versetzt, wobei die Steuersignale ebenfalls wieder von einem Bordrechner ausgehen können. Allerdings kann der Motor 112 - oder auch mehrere Motoren - an anderen Stellen des Führungsgehäuses 108 angebracht werden, was sich stets nach den gegebenen räumlichen Möglichkeiten und der Umweltbedingungen (anfallender Schmutz, mechanische Einwirkung) richtet. Die Bewegung des Rings 110 innerhalb des Führungsgehäuses 108 kann mit wenig Reibung vonstatten gehen, wenn nicht gezeigte Führungsrollen oder dergleichen den Ring 110 stützen und führen. Der Ring 110 kann sowohl aus Metall als auch aus einem Kunststoff gebildet sein. Nahezu am unteren Ende des Führungsgehäuses 108 sind an dessen Rückseite Kupplungselemente 114 vorgesehen, die in Eingriff mit den unteren Anschlusspunkten 32 gebracht werden können.

Der Träger 82 enthält einen Rahmen 92, eine Rolle 94 und eine Wange 96. Der Träger 82 hat die Aufgabe, den Rundballen 44 während des Wickelvorgangs zu tragen und um seine Zylinderachse zu drehen oder drehbar aufzunehmen. Nach dem Wickelvorgang soll der Träger 82 den gewickelten Rundballen 44 auf den Boden abgeben. Der Träger 82 befindet sich im unteren Viertel oder Fünftel der Ringführung 80.

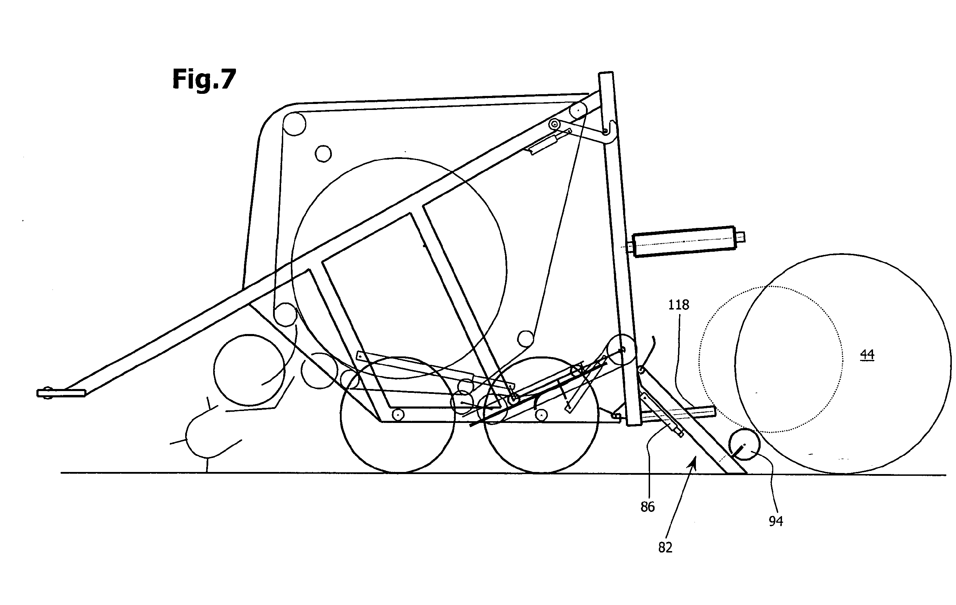

Mit Blick auf Figur 2 ist zu erkennen, dass der Rahmen 92 eine Querstrebe 98 und Längsstreben 100 in waagrechter Lage aufweist. Die Querstrebe 98 ist so weit von der Ringführung 80 entfernt, dass der Wickelmaterialträger 84 durch den Innenraum hindurch bewegt werden kann; sie ist so breit oder nahezu so breit wie der Durchmesser der Ringführung 80. Die Längsstreben 100 verbinden die Querstrebe 98 mit der Ringführung 80, erstrecken sich hierzu in der Fahrtrichtung und greifen in einem Lager 102 vertikal schwenkbar an der Ringführung 80 an. Hierzu sind die Längsstreben 100 erforderlichenfalls an dem vorderen Endbereich auf das Führungsgehäuse 108 zu gekröpft, oder auf letzteres sind Lagerböcke aufgesetzt, die den seitlichen Abstand zwischen dem Führungsgehäuse 108 und den Längsstreben 100 überbrücken. Innerhalb des von dem Rahmen 92 in Draufsicht umschlossenen Raums und an die rückwärtige Seite des Führungsgehäuses 108 angeschlossen befindet sich eine Abwurfhilfe 118. Diese Abwurfhilfe 118 besteht aus einem kleinen starren Rahmen, der über die Längsstreben 100 hinaus und aus dem umschlossenen Raum heraus ragt, wenn der Träger 82 abgekippt ist - siehe Figur 4 und 7. Diese Abwurfhilfe 118 vermeidet, dass ein kleiner Rundballen 44 selbst dann noch auf der rückwärtigen Rolle 94 ruht, wenn der Träger 82 nach unten gekippt ist. Vielmehr wird beim Absenken des Trägers 82 sein Mittelpunkt über die Rolle 94 bewegt, so dass er von dem Träger 82 herunter rollt.

Die Rolle 94 ist in Lagerböcken drehbar auf die Querstrebe 98 aufgesetzt und erstreckt sich waagrecht quer zur Fahrtrichtung der Kombination 10; sie liegt somit an der Umfangsfläche des aufgenommenen Rundballens 44 an. Die Rolle 94 ist ungefähr so breit wie ein Rundballen 44 und wird angetrieben, falls die Walze 38 nicht angetrieben wird.

Die Wange 96 ist als Bügel, Blechschulter oder dergleichen ausgebildet und befindet sich auf der der Rolle 94 gegenüberliegenden Seite des Rahmens 92. Die Wange 96 ist so geformt bzw. angebracht, dass sie sich bei entsprechenden Stellungen des Fördertischs 52 und des Trägers 82 auf der rückwärtigen Walze 38, auf deren Drehachse oder dergleichen abstützt, wie dies in Figur 5 gezeigt ist. Die Wange 96 muss sich hierzu nicht über die gesamte Breite der Walze 38 erstrecken. Der Sinn der Wange 96 besteht darin, den Rundballen 44 selbst dann noch auf dem Träger 82 zu halten, wenn der Fördertisch 52 wieder nach vorne und unten gekippt wird. Die Lage der Wange 96 mit der rückwärtigen Walze 68 und der Rolle 94 ist so gewählt, dass sie den Rundballen 44 während des Wickelprozesses mittig zu der Bewegungsbahn des Wickelmaterialträgers 84 positionieren.

Der Wickelmaterialträger 84 enthält sichtbar eine Spindel 104 und eine Materialrolle 106. Daneben und nicht dargestellt befindet sich auf dem Wickelmaterialträger 84 auch eine Vorspanneinrichtung, eine Schneideinrichtung und/oder eine Anlageeinrichtung, wie dies an sich bekannt ist. Die Spindel 104 ist in axialer Richtung auf dem Ring 110 befestigt, erstreckt sich durch den Schlitz in dem Führungsgehäuse 108 und trägt in dem äußeren Bereich drehbar und axial gesichert die Materialrolle 106. Die Materialrolle 106 besteht aus einer erheblichen Länge aufgewickelten Wickelmaterials aus Kunststoff, die handelsüblich erworben werden kann.

Die dritte Betätigungsvorrichtung 86 ist wiederum als Hydraulikzylinder ausgebildet und einerseits an dem Führungsgehäuse 108 und andererseits an der Unterseite des Trägers 82 gelenkig angeschlossen. Die dritte Betätigungsvorrichtung 86 wird wie auch die anderen Betätigungsvorrichtung vorzugsweise mittels eines Bordrechners elektromagnetisch gesteuert. Mittels der dritten Betätigungsvorrichtung 86 kann der Träger 82 in eine abgesenkte Stellung, in eine Stellung, in der sie im Wesentlichen senkrecht zu der Haupterstreckungsebene des Führungsgehäuses 108 verläuft und in eine angehobene Stellung gebracht werden, wie dies in Figur 5 gezeigt ist. In der abgesenkten Stellung dient der Träger 82 als eine Abstellstütze für die Ringsführung 80. Die dritte Betätigungsvorrichtung 86 kann mit einem Gasdruckspeicher versehen oder verbunden werden, damit sie in einer Richtung, nämlich nach unten, begrenzt nachgeben kann.

Die Stütze 88 ist in der unteren Hälfte des Führungsgehäuses 108 und seitlich an diesem angebracht. Sie kann aus zwei einzelnen Beinen bzw. Streben oder auch aus einem U-förmigen Bügel bestehen, der aus der Ebene des Führungsgehäuses 108 nach vorne weggeklappt und auf nicht gezeigte Weise arretiert werden kann. Es ergibt sich insbesondere mit Blick auf Figur 3, dass das Wickelgerät 14 in der demontierten Stellung vorne auf der Stütze 88 und hinten auf dem Träger 82 bzw. des Längs- und/oder Querstreben 98, 100 ruht.

Nach alledem ergibt sich folgende Funktion des ersten Ausführungsbeispiels, wobei ergänzend darauf hingewiesen wird, dass in jedem Fall der Rundballen 44 vor dem Entlassen aus dem Pressraum 22 gebunden oder mit Netz umwickelt wird, um seine kompakte und runde Form beizubehalten. Die Kombination 10 und das Wickelgerät 14 würden zwar auch ohne diesen Binde- oder Wickelvorgang funktionieren, die Ballenqualität wäre aber schlechter.

Die Rundballenpresse 12 kann einzeln oder in der Kombination 10 mit dem Wickelgerät 14 betrieben werden. Wenn sie einzeln betrieben wird, ist lediglich der Förderer 26 angebaut, der wie zuvor beschrieben wurde, den Rundballen 44 aufnehmen und auf den Boden ablegen kann.

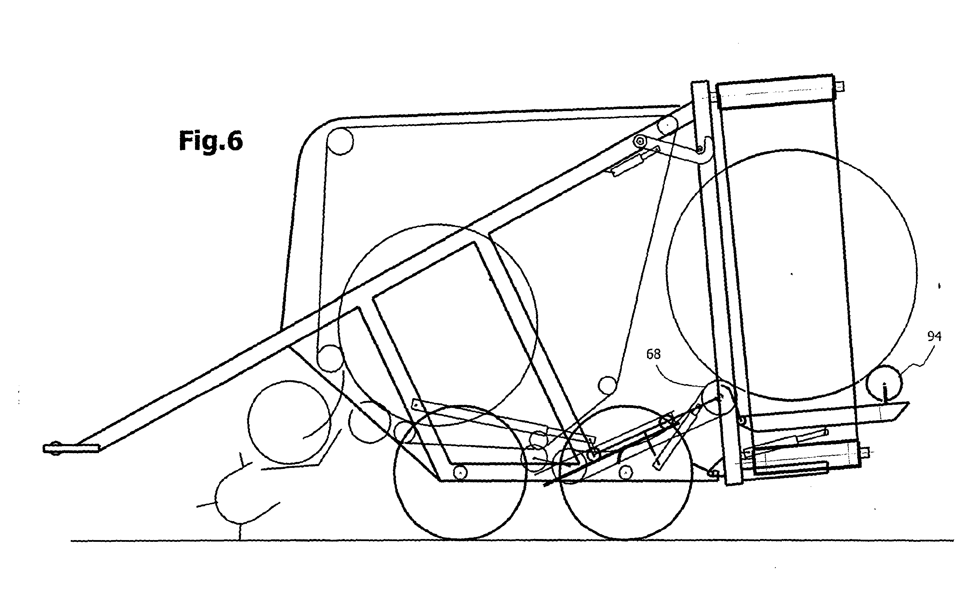

Wenn die Rundballenpresse 12 und das Wickelgerät 14 miteinander verbunden sind, dient der Förderer 26 nicht der Ablage des Rundballens 44 auf dem Boden, sondern dessen Übergabe in das Wickelgerät 14. Gemäß Figur 5 befindet sich der Schlitten 60 zur Aufnahme des fertigen und aus dem Pressraum 22 entlassenen Rundballens 44 in seiner vorderen unteren, Aufnahmestellung. Sobald der Rundballen 44 auf den Fördertisch 26 gelangt, liegt er an der vorderen, weiteren Walze 74 an und kann nicht von dem Fördertisch 26 herunter rollen, wenn dieser mittels der ersten Betätigungsvorrichtung 56 schräg nach hinten innerhalb der Führung 54 verfahren wird. Sobald der Schlitten 60 seine rückwärtige und obere Endstellung erreicht hat, wird die zweite Betätigungsvorrichtung 58 ausgefahren, so dass der Schlitten um das Lager 64 vorne nach oben kippt und den Rundballen 44 auf den Träger 82 auflegt. Während der Auflage ist der Träger 82 hinten um circa 30 Grad nach oben geschwenkt, und die Wange 96 liegt auf der rückwärtigen Walze 68 oder in deren Bereich auf, damit kein störender Spalt zwischen dem Fördertisch 26 und dem Träger 82 entsteht. In diesem Zustand verlaufen die lasttragenden Flächen des Fördertischs 26 und des Träger 82 wie eine Kehle zueinander, so dass der Rundballen 44 sicher erfasst ist und nicht herunter rollen kann. Wenn die dritte Betätigungsvorrichtung 86 mit einem Gasdruckspeicher zusammenwirkt, was nicht erforderlich ist, gibt sie beim Auftreffen des Rundballens 44 geringfügig nach und mildert dessen Auftreffen etwas ab. Der Rundballen 44 ruht dann auf der rückwärtigen Walze 68 des Fördertischs 26 und der Rolle 94, wobei sich sein Schwerpunkt zwischen beiden befindet. Anschließend wird der Träger 82 in seine senkrecht zu dem Führungsgehäuse 108 verlaufende Stellung abgesenkt, in der er weiterhin auf der Walze 68 und der Rolle 94 ruht, wie es in Figur 6 gezeigt ist. Bei der Lage nach Figur 6 wird die Walze 68 oder die Rolle 94 angetrieben, so dass der Rundballen 44 um seine quer zur Fahrtrichtung der Kombination 10 verlaufende und horizontale Zylindermittenachse drehen wird. Anschließend wird mittels des oder der Motoren 112 der Ring 110 in dem Führungsgehäuse 108 in Drehung versetzt, so dass die Wickelmaterialträger 84 in einer vertikalen Bahn um den Rundballen 44 bewegt werden und in bekannter Weise Folie auf diesen aufwickeln. Da es an sich bekannt ist, wird hier nicht auf das Anlegen, Strecken und Schneiden der Folie eingegangen. Es ist ersichtlich, dass die Rundballenpresse 12 in dieser Stellung bereits wieder zum Bilden eines neuen Rundballens 44 betrieben werden kann, obwohl der Rundballen 44 noch umwickelt wird. Während des Wickelvorgangs bewegen sich die Wickelmaterialträger 84 auch durch den von dem Rahmen 92 umschlossenen Innenraum. Wenn der Wickelvorgang abgeschlossen und auch die Folie abgetrennt ist, wird die dritte Betätigungsvorrichtung 86 eingefahren und somit der Träger 82 abgesenkt. Während der Absenkung des Trägers 82 zieht dieser sich hinter die rückwärtige Kante der Abwurfhilfe 118 zurück, so dass der Rundballen 44 einen zusätzlichen Impuls nach hinten erfährt und über die Rolle 44 aus dem Bereich des Träger 82 rollt. Nunmehr ist der Wickel- und Ablagevorgang beendet und es kann ein weitere Rundballen 44 angenommen und gewickelt werden.

Die weitere Beschreibung befasst sich mit dem zweiten Ausführungsbeispiel, das im Wesentlichen dem ersten Ausführungsbeispiel entspricht; Unterschiede bestehen in der Verstellung des Schlittens 60, des Fördertischs 52 und in der Stellung des Trägers 82 beim Aufnehmen des Rundballens 44.

Anstelle zweier Betätigungsvorrichtungen 56 und 58 wird nur eine einzige Betätigungsvorrichtung 58' verwendet, die in gleicher Weise wie die zweite Betätigungsvorrichtung 58 nach dem ersten Ausführungsbeispiel angelenkt und als Hydraulikmotor ausgebildet ist. Allerdings weist die Betätigungsvorrichtung 58' einen wesentlich längeren Hub auf und ist vorzugsweise doppeltwirkend ausgebildet. Außerdem ist an dem Schlitten 60 ein Halter 120 angebracht, und zwar wenigstens auf einer Seite. Schließlich ist eine Verriegelungsvorrichtung 122 vorgesehen.

Die Verriegelungsvorrichtung enthält wenigstens einen Haken 124 und ein Gestänge 126. Es sind so viele Haken 124 wie Halter 120 vorgesehen, und der bzw. die Haken 124 sind so angeordnet und ausgebildet, dass sie jeweils einen Halter 124 formschlüssig übergreifen und halten können. Jeder Haken 124 ist um ein Lager 128 vertikal schwenkbar und weist von dem Lager 128 ausgehend nach vorne eine Hakennase 130 und nach hinten einen Hebel 132 auf. Jeder Haken 124 ist an dem Führungsgehäuse 108 vorzugsweise an dessen Außenseite vertikal schwenkbar angebracht und zwar so, dass er den Halter 120 mit der Hakennase 130 ergreifen kann, wenn das Wickelgerät 14 an die Rundballenpresse 12 angebaut ist und der Schlitten 60 nach hinten bis zum Anschlag an dem Führungsgehäuse 108 bewegt ist. Während in der Zeichnung eine nach oben offene Hakennase 130 gezeigt ist, könnte auch eine nach unten offene verwendet werden.

Es ist wenigstens ein Gestänge 126 vorgesehen, das in diesem Ausführungsbeispiel als eine Druckfeder ausgebildet ist und zwischen dem Hebel 132 und einer nach vorne über das Lager 102 hinausgehenden Verlängerung des Rahmens 92 angeordnet. Anstelle als Druckfeder könnte das Gestänge auch als Stange, als Seilzug, als Zugfeder, als Kipphebel oder dergleichen ausgebildet werden; wesentlich ist dabei, dasseine Beziehung zwischen der Stellung des Hakens 124 und des Trägers 82 hergestellt werden kann. Es ist möglich, dass zwar zwei Haken 124 vorgesehen sind, die aber gemeinsam gesteuert werden, so daß es nur eines Gestänges 126 bedarf.

Entgegen der Darstellung in Figur 5 zu dem ersten Ausführungsbeispiel wird der Träger beim Aufnehmen des Rundballens 44 nicht angehoben, sondern bleibt in seiner im Wesentlichen horizontalen Lage; die Stoßdämpferfunktion der Betätigungsvorrichtung 86 bleibt aber vorzugsweise erhalten.

Die Funktion dieses zweiten Ausführungsbeispiels wird wie folgt beschrieben.

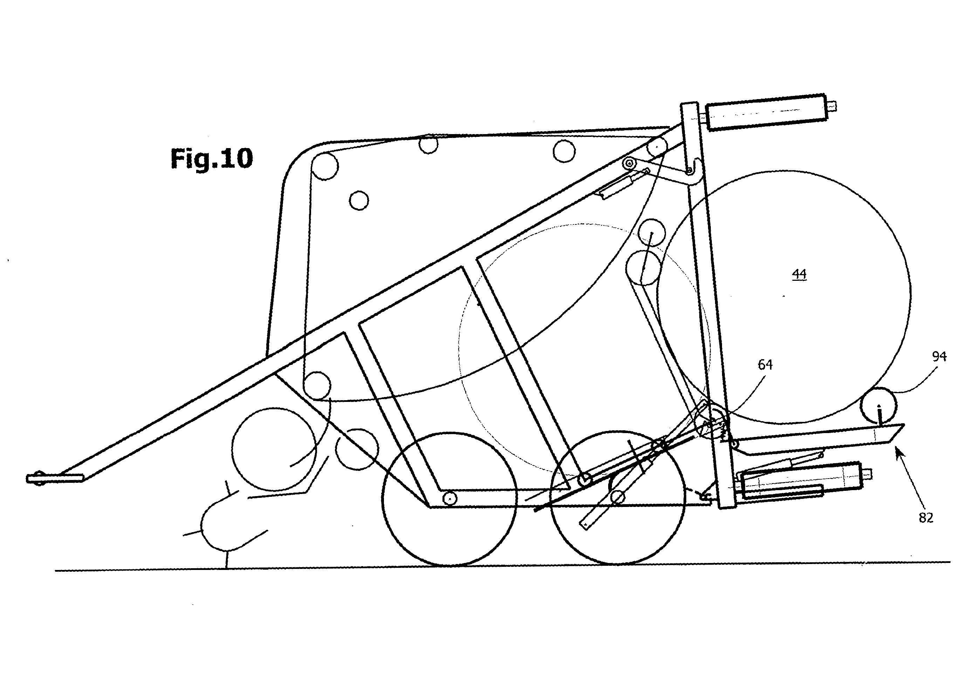

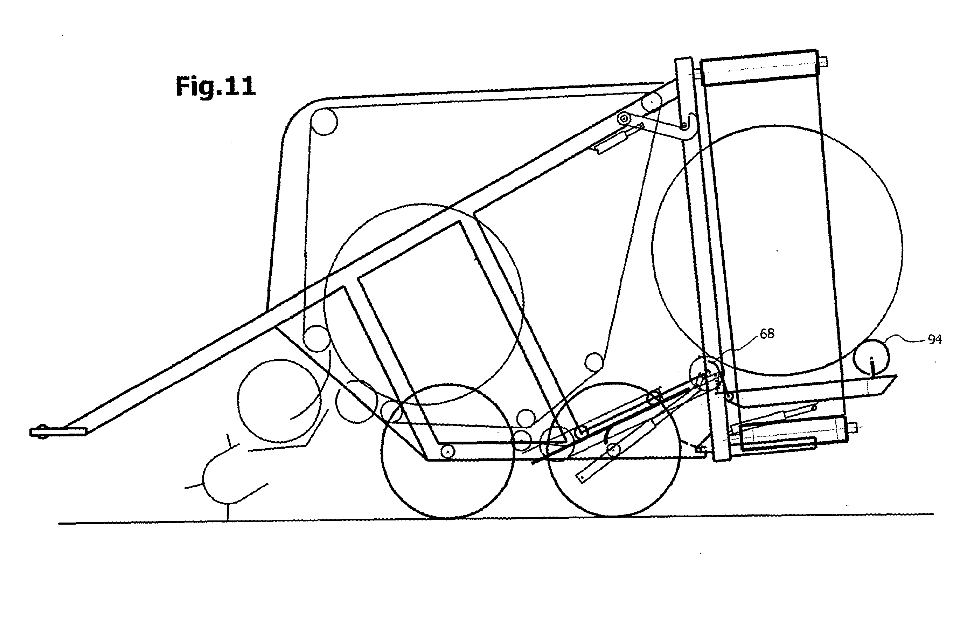

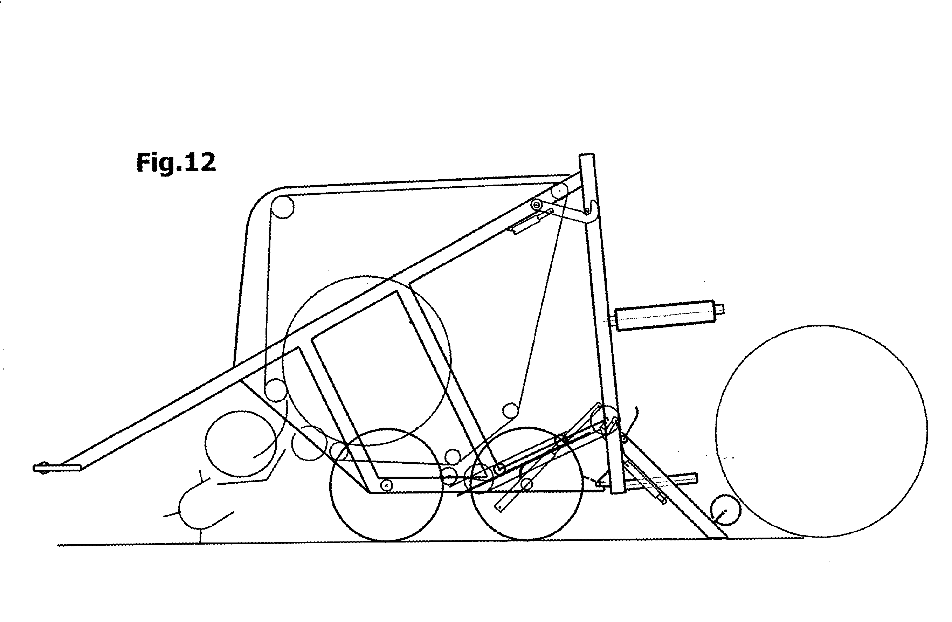

Sobald der Rundballen 44 auf dem Fördertisch 52 aufliegt, wird die Betätigungsvorrichtung 58' ausgefahren und der Schlitten 60 bewegt sich in der Führung 54 nach hinten oben, so dass der Rundballen 44 zu dem Träger 82 befördert wird. Sobald der Schlitten 60 seine rückwärtige Endstellung erreicht hat, hintergreift der Haken 124 den Halter 120 und hält ihn in dieser Stellung fest. Die Betätigungsvorrichtung 58' wird weiter ausgefahren und der Fördertisch 52 schwenkt mit Blick auf Figur 10 um das Lager 64 im Uhrzeigerdrehsinn nach oben, um den Rundballen 44 auf den Träger 82 abzulegen, bis er auf der Rolle 94 ruht. Anschließend wird die Betätigungsvorrichtung 58' entweder drucklos gemacht, so dass sie sich absenken kann, oder sie wird unter Druck gesetzt und fährt ein; infolgedessen senkt sich auch der Fördertisch 52 ab und löst sich,- abgesehen von der rückwärtigen Walze 68, von der Umfangsfläche des Rundballens 44. In dem nunmehr eingetreten und in Figur 11 gezeigten Zustand kann wie bereits bei dem ersten Ausführungsbeispiel der Wickelvorgang durchgeführt werden. Sobald der Wickelvorgang beendet ist und der Träger 82, wie in Figur 12 gezeigt, hinten nach unten gekippt wird, um den Rundballen 44 auf den Boden abzulegen, drückt die Verlängerung des Trägers 82 auf das Gestänge 126, dieses auf den Hebel 132 und somit hebt sich die Hakennase 130 von dem Anschlag. Die Aufhebung dieses Formschlusses macht es nun möglich, dass die Betätigungsvorrichtung 58' vollkommen einfährt und den Schlitten 60 mit dem Fördertisch 52 in seine Aufnahmestellung unter dem Pressraum 22 bewegt, siehe Figur 12.

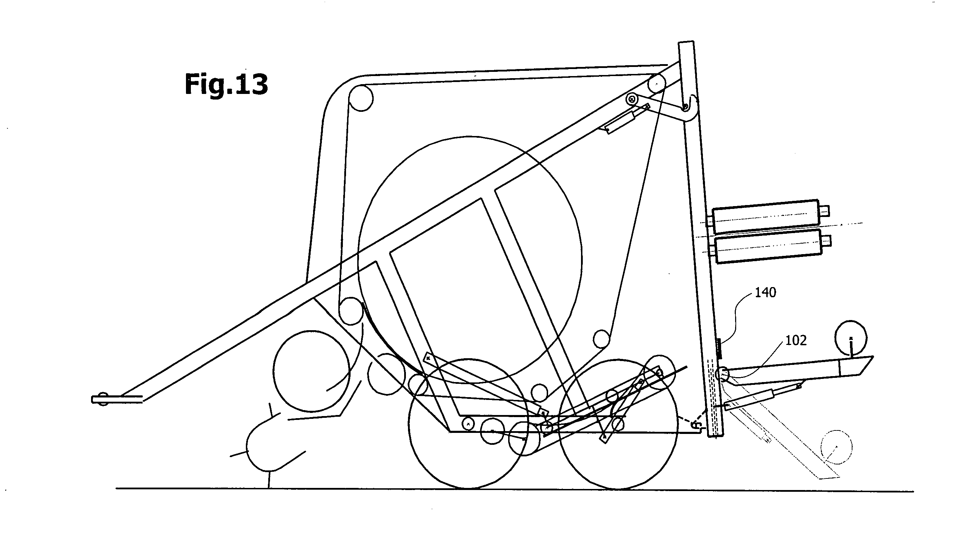

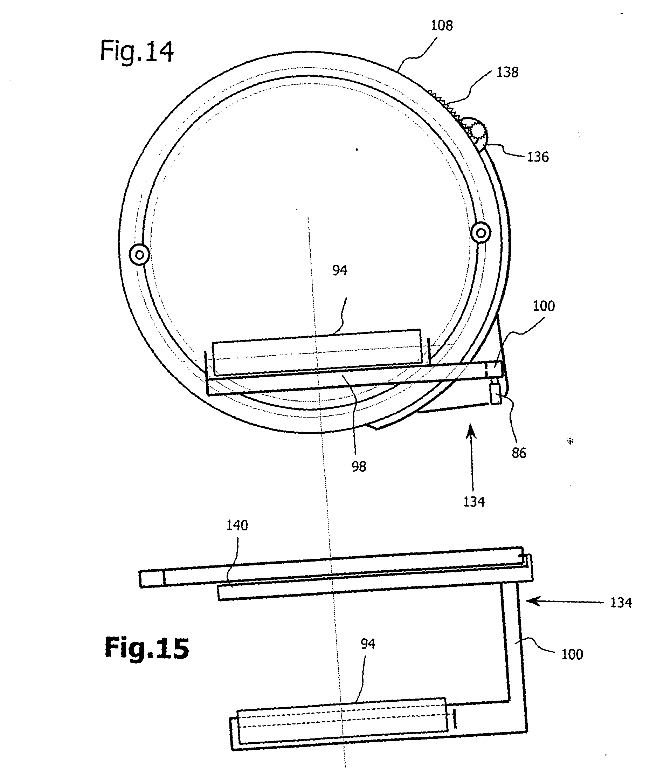

In den Figuren 13 bis 17 wird ein weiteres Ausführungsbeispiel beschrieben, das im Wesentlichen dem ersten Ausführungsbeispiel folgt, allerdings einen anderen Träger 82' aufweist.

Im Gegensatz zu dem bisher beschriebenen Träger 82 weist der nunmehr verwendete Träger 82 nur eine Längsstrebe 100 auf, während die z. B. auf der linken Seite vorgesehene fehlt. Der Träger weist ungefähr die Form einer Gabel auf, die allerdings in der gleichen Weise wie bei dem ersten oder dem zweiten Ausführungsbeispiel mittels der Betätigungsvorrichtung 86 verstellt wird. Allerdings sind das Lager 102 und die Betätigungsvorrichtung 86 nicht an dem Führungsgehäuse 108 vorgesehen, sondern auf einem Gleitgestell 134. Das Gleitgestell 134 ist entsprechend des Führungsgehäuses 108 gekrümmt und greif auf dessen Außenumfangsfläche über ein Bogenmaß von circa neunzig Grad formschlüssig ein. Beispielsweise kann ein Omega- oder Hutprofil und Rollen vorgesehen werden, die der Aufnahme des Gleitgestells 134 auf dem Führungsgehäuse 108 dienen. Das Gleitgestell 134 wird mittels eines Motors 136 um die Mittenachse des Führungsgehäuses 108 bewegt, der in einen Zahnkranz 138 auf dessen Umfangsfläche eingreift. Statt dessen könnte aber auch ein Seilzug, ein Hydraulikzylinder, ein Elektromotor oder dergleichen verwendet werden, die zumindest eine aufwärts gerichtete Bewegung verursachen, während die Abwärtsbewegung alleine aufgrund der Schwerkraft erfolgt.

Während die Wickelfunktion mit diesem Träger 82' der der anderen Ausführungsbeispiele entspricht, weist diese Ausführungsform eine andere und eventuell zusätzliche Ablagemöglichkeit auf, wobei die bisherigen Möglichkeiten mittels der Betätigungsvorrichtung 86 erhalten bleiben.

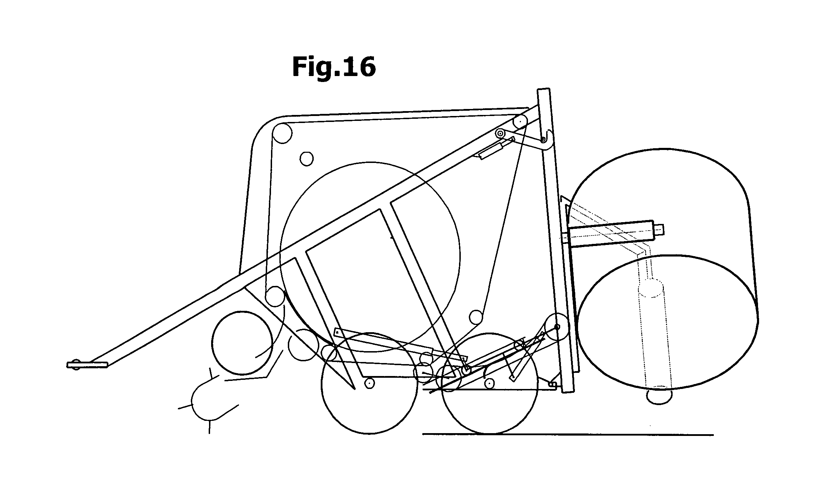

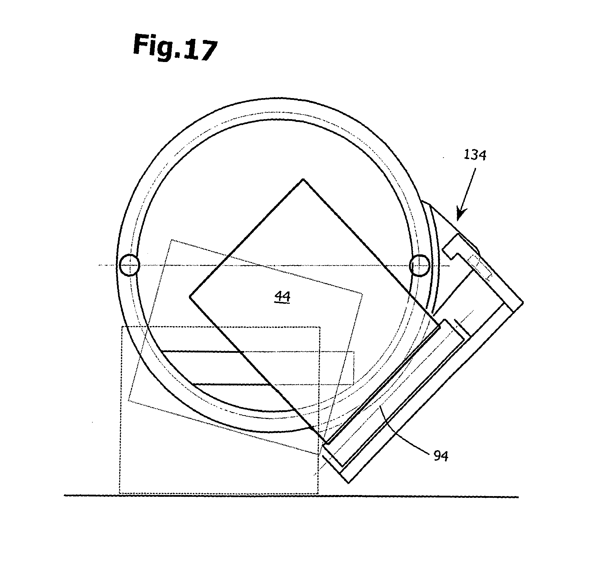

Der weitere Vorteil dieses Trägers 82' besteht darin, dass er den Rundballen 44 auf seiner Stirnseite ablegen kann, wie dies in den Figuren 16 und 17 gezeigt ist. Diese Ablageart ist insbesondere am Hang sehr vorteilhaft, weil dadurch der Rundballen 44 nicht wegrollen kann. Insbesondere aus Figur 17 ist ersichtlich, dass das Gleitgestell 134 soweit um die horizontale Längsachse des Wickelgeräts 14 geschwenkt werden kann, bis die Rolle 94 und ein ihr gegenüber vorhandenes Gegenlager 140, das nur zum Tragen kommt, wenn sich die Walze 68 des Fördertischs 52 nicht in ihrer rückwärtigen Endstellung befindet, eine Neigung von circa 45 Grad zum Boden einnehmen. Das Gegenlager 140 kann eine Blechplatte, eine Rolle, eine Strebe oder dergleichen sein. In dieser Stellung wird der Rundballen 44 über die untere Kante der Rolle 94 und des Gegenlagers 140 kippen und auf der Stirnfläche landen und liegen bleiben. Je nach der Ausführungsform und der Größe des Rundballens 44 kann das Kippen auch früher oder später eintreten; es kommt stets darauf an, wann der Schwerpunkt seitlich der unteren Kante der Rolle 94 zu liegen kommt. Sobald der Rundballen 44 abgesetzt und die Kombination 10 an ihm vorbeigefahren ist, kann der Träger 82' wieder in seine ursprüngliche waagrechte Stellung zurückgeschwenkt werden, in der er einen neuen Rundballen 44 aufnehmen kann.

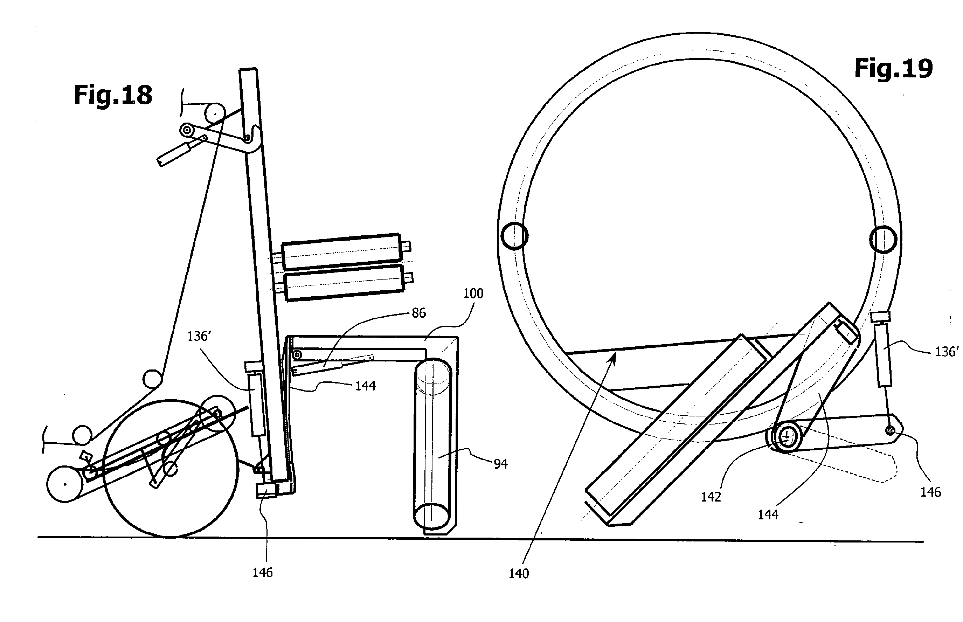

Das vierte Ausführungsbeispiel nach den Figuren 18 und 19 entspricht im Wesentlichen dem dritten Ausführungsbeispiel; allerdings wird die Ablage der Rundballens 44 auf seiner Stirnfläche auf eine andere Weise erreicht; die Ausbildung der Rundballenpresse 12 und des Förderers 26 entspricht denen der vorherigen Ausführungsbeispiele.

Im Unterschied zu dem dritten Ausführungsbeispiel ist der Träger 82 nicht auf einem Gleitgestell 134 befestigt, sondern um einem sich im Wesentlichen in der Fahrtrichtung erstreckende horizontale Achse 142 schwenkbar, auf der ein Arm 144 schwenkbar gelagert ist.

Die Achse 142 ist einerseits in dem Führungsgehäuse 108 und andererseits in dem Arm 144 fest bzw. beweglich aufgenommen. Die Achse 142 ist als ein Stahlzapfen oder dergleichen ausgebildet und vorzugsweise mit geringer Neigung zu der Fahrtrichtung ausgerichtet und zwar zur Seite. Die Achse 142 bzw. Welle erstreckt sich nach hinten über das Führungsgehäuse 108, um den Arm 142 aufzunehmen und nach vorne, um mit einem Hebelarm 146 verbunden zu werden.

Der Arm 142 ist mit der Längsstrebe 100 starr verbunden und erstreckt sich in einer parallel zu der Querstrebe 98 verlaufenden Ebene. Der Arm 142 verläuft sehr nahe an dem Führungsgehäuse 108 und dem Gegenlager 140. Zwischen dem Arm 142 und der Längsstrebe 100 erstreckt sich die dritte Betätigungsvorrichtung 86, die den Träger 82 wie bereits zuvor beschrieben in seine Aufnahme- und seine Abgabestellung bringt.

Der Hebelarm 146 erstreckt sich radial zu der Achse 142 und ist endseitig mit einem Motor 136' verbunden. Der Hebelarm 146 erstreckt sich in dem dargestellten Ausführungsbeispiel vor dem Führungsgehäuse 108 und ist zwischen einer circa 3-Uhr und einer circa 5-Uhr-Stellung verstellbar, wenn man das Wickelgerät 14 von der Rückseite betrachtet.

Der Motor 136' ist als ein einfach- oder doppeltwirkender Hydraulikzylinder ausgebildet, der anderenends an das Führungsgehäuse 108 schwenkbar angeschlossen ist. Der Motor 136' wird wiederum vorzugsweise mittels eines Bordrechners automatisch und mittels nicht gezeigter Elektromagnetventile verstellt, d.h. aus- oder eingefahren. .

Nach alledem ergibt sich folgende Funktion des vierten Ausführungsbeispiels.

Die Bildung, die Bindung, die Abgabe und der Transport des Rundballens 44 zu dem Träger 82 und die Umwicklung mit Folie auf diesem erfolgt auf die bisher beschriebene Weise. In dieser Stellung ist der Motor 136' ausgefahren und der Träger 82 mit seiner Rolle 94 verlaufen in einer waagrechten Ebene. Sobald der Wickelprozess abgeschlossen ist und der Rundballen 44 auf den Boden abgelegt werden kann, wird der Motor 136' eingefahren und der Träger 82 kippt um bzw. mit der Achse 142 mit Blick auf Figur 19 entgegen dem Uhrzeigerdrehsinn, bis er circa 45 Grad zum Boden geneigt ist. In dieser Stellung fällt der Rundballen 44 auf seine Stirnseite. Soll der Rundballen 44 auf seiner Umfangsfläche abgelegt werden, bleibt der Motor 136' starr und die Betätigungsvorrichtung 86 wird betätigt, so dass der Rundballen 44 in seiner üblichen Weise auf den Boden gelangt.

## Patentansprüche

1. Wickelgerät (14) zur Umhüllung eines Rundballens (44) mit einer Hüllbahn, das eine im Wesentlichen vertikal ausgerichtete Ringführung (80) für wenigstens einen Wickelmaterialträger (84) aufweist, in deren Innenraum sich ein Träger (82) mit einer Rolle (94) und eine Walze (68) zur Abstützung eines Rundballens (44) befindet, wobei während des Wickelvorgangs die Drehachse des Rundballens (44) senkrecht zu der Mittenachse des Bewegungskreises des Wickelmaterialträgers (84) verläuft.

2. Wickelgerät nach Anspruch 1, **dadurch gekennzeichnet, dass** der Träger (82) verstellbar an der Ringführung (80) anbringbar ist.

3. Wickelgerät nach Anspruch 1 oder 2, **dadurch gekennzeichnet, dass** die Ringführung (80) mittels einer Stütze (88) und/oder dem Träger (82) auf dem Boden gegen Kippen gehalten werden kann.

4. Wickelgerät nach einem oder mehreren der vorherigen Ansprüche, **dadurch gekennzeichnet, dass** der Träger (82) gegenüber der Rolle (84) ein Gegenlager (140) aufweist.

5. Wickelgerät nach einem oder mehreren der vorherigen Ansprüche, **dadurch gekennzeichnet, dass** die Ringführung (80) einen drehbaren Ring (110) aufweist, der in einem geschlitzten Führungsgehäuse (108) motorisch drehbar ist und wenigstens einen Wickelmaterialträger (84) aufweist, oder dass wenigstens ein Wickelmaterialträger (84) mittels eines Motors (112) in, an oder auf einem Führungsgehäuse (108) auf einer Ringbahn sich selbst fortbewegend gelagert ist.

6. Wickelgerät nach einem oder mehreren der vorherigen Ansprüche, **dadurch gekennzeichnet, dass** der Träger 82 einen Rahmen 92 mit einem Innenraum aufweist, durch den der Wickelmaterialträger 84 während des Wickelbetriebs bewegbar ist.

7. Wickelgerät nach einem oder mehreren der vorherigen Ansprüche, **dadurch gekennzeichnet, dass** die Ringführung (80) Formschlußelemente zur schnelllösbaren Verbindung mit einer Rundballenpresse (12), einer Dreipunktgerätekupplung, einem Front- oder Hecklader oder dergleichen aufweist.

8. Wickelgerät nach einem oder mehreren der vorherigen Ansprüche, **dadurch gekennzeichnet, dass** der Träger (82) an der Ringführung (80) in Umfangsrichtung verstellbar anbringbar ist.

9. Wickelgerät nach einem oder mehreren der vorherigen Ansprüche, **dadurch gekennzeichnet, dass** der Träger (82) gegenüber der Ringführung (80) vertikal verstellbar ist.

10. Wickelgerät nach einem oder mehreren der vorherigen Ansprüche, **dadurch gekennzeichnet, dass** das Führungsgehäuse (108) mit einer Abwurfhilfe (118) versehen ist, deren Lage gegenüber dem Träger (82) veränderbar und die in dem Innenraum des Rahmens (92) vorgesehen ist.

11. Wickelgerät nach einem oder mehreren der vorherigen Ansprüche, **dadurch gekennzeichnet, dass** der Träger (82) mittels einer Betätigungsvorrichtung (86) verstellbar ist und die Betätigungsvorrichtung (86) nachgiebig ausgebildet oder angebracht ist.

12. Wickelgerät nach einem oder mehreren der vorherigen Ansprüche, **dadurch gekennzeichnet, dass** die Drehzahl der Rolle (94) oder der Walze (68) veränderbar ist.

13. Wickelgerät nach einem oder mehreren der vorherigen Ansprüche, **dadurch gekennzeichnet, dass** die radiale Lage der Rolle (94) veränderbar ist.
